# EUROPÄISCHE PATENTANMELDUNG

(11) **EP 4 714 870 A1**
(43) Veröffentlichungstag der Anmeldung: **25.03.2026**
(21) Anmeldenummer: 24201696.2
(22) Anmeldetag: 20.09.2024
(51) Int. Cl.: B65G 1/137, B25J 9/00, B65G 13/10, B65G 47/52

(54) **VERFAHREN ZUM AUTOMATISCHEN KOMMISSIONIEREN VON STÜCKGUT-OBJEKTEN AUS QUELL-BEHÄLTERN IN ZIEL-BEHÄLTER, ZUGEHÖRIGE FÖRDERANLAGE ZUM FÖRDERN VON TRANSPORT-BEHÄLTERN AUF FÖRDERBAHNEN UND COMPUTERPROGRAMMPRODUKT**

(71) Anmelder: Swisslog AG, 5033 Buchs/Aarau (CH)
(72) Erfinder: WEBER, Jörg, 44359 Dortmund (DE)
(74) Vertreter: Böss, Dieter Alexander

(57) **Zusammenfassung**

Die Erfindung betrifft ein Verfahren zum automatischen Kommissionieren von Stückgut-Objekten (1) aus Quell-Behältern (2) in Ziel-Behälter (3) mittels eines automatisch angesteuerten Roboterarms (4) in einem Kommissionierbereich (5). Die Erfindung betrifft außerdem eine entsprechende Förderanlage (7) mit einer ersten Förderbahn (6.1) und einer zweiten Förderbahn (6.2), wobei der Kommissionierbereich (5) der Förderanlage (7) durch einen bogenförmig verlaufenden ersten Kurvenbahnabschnitt (6a) der ersten Förderbahn (6.1) und einen bogenförmig verlaufenden zweiten Kurvenbahnabschnitt (6b) der zweiten Förderbahn (6.2) gebildet wird, und die Förderanlage (7) einen antreibbaren Querförderer (20) aufweist, der ausgebildet und eingerichtet ist zum aktiven Transferieren eines jeweiligen Transport-Behälters zwischen dem ersten Kurvenbahnabschnitt (6a) der ersten Förderbahn (6.1) und dem zweiten Kurvenbahnabschnitt (6b) der zweiten Förderbahn (6.2). Die Erfindung betrifft auch ein zugehöriges Computerprogrammprodukt.

## Beschreibung

Die Erfindung betrifft ein Verfahren zum automatischen Kommissionieren von Stückgut-Objekten aus Quell-Behältern in Ziel-Behälter, eine zugehörige Förderanlage zum Fördern von Transport-Behältern auf Förderbahnen und ein Computerprogrammprodukt.

Die US 2014/0244026 A1 beschreibt ein System und ein Verfahren zur Auftragsabwicklung. Dieses umfasst einen Roboterarm mit einem Endeffektor zum Greifen eines Stückgutes. Eine bogenförmige Struktur ist innerhalb der Reichweite des Roboterarms beweglich. Ein Fördersystem bringt das Stückgut in Behältern zu der bogenförmige Struktur und nimmt einen Behälter aus dem das Stückgut entnommen ist von der gebogenen Struktur wieder weg. Ein Steuersystem führt einen Auftrag aus, indem es das Fördersystem anweist, das Stückgut zu der bogenförmigen Struktur zu bringen, das Stückgut auf der bogenförmigen Struktur relativ zu dem Roboterarm zu positionieren, ein ausgewähltes Stückgutobjekt für einen Auftrag zu bestimmen, den Roboterarm anzuweisen, das ausgewählte Stückgutobjekt von einem Entnahmeort des ausgewählten Behälters zu einem Ausgabeort an einem Zielbehälter zu bewegen, und das Fördersystem anzuweisen, den Zielbehälter von der bogenförmigen Struktur zu nehmen.

Die US 5 556 246 A beschreibt ein System zum Lagern, Auslagern und Transportieren von Gütern, mit rechteckigen Einheiten, die Luftauslassmittel aufweisen, die mit einer Druckluftquelle in Verbindung stehen, um die Einheiten mit Druckluft zu versorgen, um ein Luftkissen zu bilden, und mit einer Querbewegungseinrichtung und einer Längsbewegungseinrichtung um eine aufgestellte Palette selektiv in Quer- bzw. Längsrichtung automatisch auf dem Luftkissen verschieben zu können.

Die EP 2 874 923 B1 beschreibt ein omnidirektionales Fördersystemmodul, umfassend mindestens zwei nebeneinander angeordnete omnidirektionale Fördereinheiten, wobei die Fördereinheiten jeweils mindestens ein omnidirektionales Förderrad aufweisen und wobei die Wirkrichtungen der Förderräder der Fördereinheiten unter einem Winkel ungleich Null zueinander verlaufen, wobei die Fördereinheiten einen einzeln zugeordneten Antriebsmotor zum individuellen Antreiben des mindestens einen Förderrades umfassen.

Aufgabe der Erfindung ist es, ein Verfahren zum automatischen Kommissionieren von Stückgut-Objekten aus Quell-Behältern in Ziel-Behälter bereitzustellen, mit dem das Kommissionieren mittels eines Roboterarms besonders variabel und effizient durchgeführt werden kann.

Die Aufgabe wird gelöst durch ein Verfahren zum automatischen Kommissionieren von Stückgut-Objekten aus Quell-Behältern in Ziel-Behälter mittels eines automatisch angesteuerten Roboterarms in einem Kommissionierbereich, aufweisend die Schritte:
- Heranfördern eines Quell-Behälters oder eines Ziel-Behälters an den Kommissionierbereich auf einer ersten Förderbahn, die als eine Zuführbahn eingerichtet ist, wobei der Quell-Behälter oder der Ziel-Behälter im Kommissionierbereich entlang eines bogenförmig verlaufenden ersten Kurvenbahnabschnitts der ersten Förderbahn in einen Arbeitsbereich des Roboterarms bewegt wird,
- automatisches Transferieren des auf der Zuführbahn in den Kommissionierbereich herangeförderten Quell-Behälters oder Ziel-Behälters aus dem bogenförmig verlaufenden ersten Kurvenbahnabschnitt der ersten Förderbahn in einen neben dem ersten Kurvenbahnabschnitt der ersten Förderbahn liegenden, bogenförmig verlaufenden zweiten Kurvenbahnabschnitt einer zweiten Förderbahn, die eine Abführbahn bildet, und
- Wegfördern des Quell-Behälters oder des Ziel-Behälters aus dem Kommissionierbereich auf der zweiten Förderbahn, wobei der Quell-Behälter oder der Ziel-Behälter im Kommissionierbereich entlang des bogenförmig verlaufenden zweiten Kurvenbahnabschnitts der zweiten Förderbahn aus dem Arbeitsbereich des Roboterarms herausbewegt wird.

Bei dem erfindungsgemäßen Verfahren wird ein jeweiliger Quell-Behälter oder Ziel-Behälter mittels einer ersten Förderbahn an den Kommissionierbereich eines Kommissionierarbeitsplatzes automatisch herangefördert. Die erste Förderbahn weist einen Endabschnitt auf, der durch den bogenförmig verlaufenden ersten Kurvenbahnabschnitt gebildet wird. Ein jeweiliger Quell-Behälter oder Ziel-Behälter kann demgemäß maximal bis zum distalen Ende des bogenförmig verlaufenden ersten Kurvenbahnabschnitts bewegt werden. Der jeweiliger Quell-Behälter oder Ziel-Behälter kann demgemäß nicht über das distale Ende des bogenförmig verlaufenden ersten Kurvenbahnabschnitts hinaus weitertransportiert werden. Um den jeweiligen Quell-Behälter oder Ziel-Behälter wieder aus dem Kommissionierbereich entfernen zu können, muss der Quell-Behälter oder Ziel-Behälter auf die neben der ersten Förderbahn verlaufenden zweiten Förderbahn umgesetzt werden. Die zweite Förderbahn dient dazu Quell-Behälter oder Ziel-Behälter aus dem Kommissionierbereich wieder wegzufördern.

Die zweite Förderbahn weist dazu einen bogenförmig verlaufenden zweiten Kurvenbahnabschnitt auf, der neben dem bogenförmig verlaufenden ersten Kurvenbahnabschnitt verläuft. Der bogenförmig verlaufenden zweite Kurvenbahnabschnitt kann sich insoweit parallel zum bogenförmig verlaufenden ersten Kurvenbahnabschnitt erstrecken. Ein Transferieren, d.h. Umsetzen eines Quell-Behälters oder Ziel-Behälters von dem bogenförmig verlaufenden ersten Kurvenbahnabschnitt auf den bogenförmig verlaufenden zweiten Kurvenbahnabschnitt erfolgt demgemäß in einer radialen Richtung bezogen auf konzentrische Kreisbahnen, die durch den bogenförmig verlaufenden ersten Kurvenbahnabschnitt und den bogenförmig verlaufenden zweiten Kurvenbahnabschnitt vorgegeben werden.

Der Kommissionierbereich bestimmt sich durch den bogenförmig verlaufenden ersten Kurvenbahnabschnitt der ersten Förderbahn und den bogenförmig verlaufenden zweiten Kurvenbahnabschnitt der zweiten Förderbahn. Der Roboterarm ist vorzugsweise im Zentrum oder nahe des Zentrums der beiden Kreisbahnen positioniert, auf denen der erste Kurvenbahnabschnitt der ersten Förderbahn und der zweite Kurvenbahnabschnitt der zweiten Förderbahn liegen.

Der Roboterarm kann einen Endeffektor, wie beispielsweise einen Greifer tragen und führen, der Stückgut-Objekte aus einem jeweiligen Quell-Behälter automatisch entnehmen kann und diese Stückgut-Objekte automatisch in einen jeweiligen ZielBehälter ablegen oder einsetzen kann. Der Arbeitsbereich des Roboterarms kann derart gestaltet sein, dass sowohl der erste Kurvenbahnabschnitt der ersten Förderbahn als auch der zweite Kurvenbahnabschnitt der zweiten Förderbahn durch den Endeffektor des Roboterarms zum Aufnehmen von Stückgut-Objekten aus dem Quell-Behälter und/oder zum Absetzen von Stückgut-Objekten in den Ziel-Behälter erreicht werden kann.

Alternativ kann es ausreichend sein, wenn lediglich der eine Kurvenbahnabschnitt der einen Förderbahn, welcher insbesondere der innere Kurvenbahnabschnitt sein kann, durch den Endeffektor des Roboterarms zum Aufnehmen von Stückgut-Objekten aus dem Quell-Behälter und/oder zum Absetzen von Stückgut-Objekten in den Ziel-Behälter erreichbar sein kann, und der jeweils andere Kurvenbahnabschnitt der anderen Förderbahn, welcher insbesondere der äußere Kurvenbahnabschnitt sein kann, durch den Endeffektor des Roboterarms zum Aufnehmen von Stückgut-Objekten aus dem Quell-Behälter und/oder zum Absetzen von Stückgut-Objekten in den Ziel-Behälter nicht erreichbar ist. Vorzugsweise kann derjenige Kurvenbahnabschnitt derjenigen Förderbahn von dem Endeffektor des Roboterarms erreichbar sein, der auf dem kleineren Kurvenradius liegt, d.h. der dem Roboterarm am nächsten liegt.

Für das Heranfördern und Wegfördern eines Quell-Behälters kann ein erster Quell-Behälter-Kurvenbahnabschnitt einer ersten Quell-Behälter-Förderbahn vorgesehen sein und ein zweiter Quell-Behälter-Kurvenbahnabschnitt einer zweiten Quell-Behälter-Förderbahn vorgesehen sein. Demgemäß kann zusätzlich für das Heranfördern und Wegfördern eines Ziel-Behälters ein erster Ziel-Behälter-Kurvenbahnabschnitt einer ersten ZielBehälter-Förderbahn vorgesehen sein und ein zweiter ZielBehälter-Kurvenbahnabschnitt einer zweiten Ziel-Behälter-Förderbahn vorgesehen sein.

Das automatische Transferieren eines Quell-Behälters kann in radialer Richtung zwischen dem ersten Quell-Behälter-Kurvenbahnabschnitt und dem zweiten Quell-Behälter-Kurvenbahnabschnitt erfolgen, und zwar entweder in einer Richtung radial nach außen oder in der umgekehrten Richtung radial nach innen. Demgemäß kann entweder der erste Quell-Behälter-Kurvenbahnabschnitt auf einem größeren Radius liegen und der zweite Quell-Behälter-Kurvenbahnabschnitt auf einem kleineren Radius liegen, oder es kann der erste Quell-Behälter-Kurvenbahnabschnitt auf einem kleineren Radius liegen und der zweite Quell-Behälter-Kurvenbahnabschnitt auf einem größeren Radius liegen. Vorzugsweise kann vorgesehen sein, dass der erste Quell-Behälter-Kurvenbahnabschnitt zum Heranfördern eines Quell-Behälters auf dem kleineren Radius liegt, demgemäß also der erste Quell-Behälter-Kurvenbahnabschnitt näher an dem Roboterarm positioniert ist.

In analoger Weise kann das automatische Transferieren eines Ziel-Behälters in radialer Richtung zwischen dem ersten ZielBehälter-Kurvenbahnabschnitt und dem zweiten Ziel-Behälter-Kurvenbahnabschnitt erfolgen, und zwar entweder in einer Richtung radial nach außen oder in der umgekehrten Richtung radial nach innen. Demgemäß kann entweder der erste ZielBehälter-Kurvenbahnabschnitt auf einem größeren Radius liegen und der zweite Ziel-Behälter-Kurvenbahnabschnitt auf einem kleineren Radius liegen, oder es kann der erste ZielBehälter-Kurvenbahnabschnitt auf einem kleineren Radius liegen und der zweite Ziel-Behälter-Kurvenbahnabschnitt auf einem größeren Radius liegen. Vorzugsweise kann vorgesehen sein, dass der erste Ziel-Behälter-Kurvenbahnabschnitt zum Heranfördern eines Ziel-Behälters auf dem kleineren Radius liegt, demgemäß also der erste Ziel-Behälter-Kurvenbahnabschnitt näher an dem Roboterarm positioniert ist.

Indem der erste Kurvenbahnabschnitt und der zweite Kurvenbahnabschnitt nebeneinander liegend auf unterschiedlichen konzentrischen Bahnen liegen, können ein oder mehrere Quell-Behälter und/oder ein oder mehrere Ziel-Behälter auf derselben Arbeitsebene des Roboterarms herangefördert und weggefördert werden. So können aufwändige Bewegungskomponenten in Höhenrichtung beim Ansteuern des Roboterarms vermieden werden. Gleichzeitig werden die Quell-Behälter und/oder die ZielBehälter auf konzentrischen Bahnen zum Aufstellort des Roboterarms herangefördert und weggefördert, so dass der Roboterarm, der bauartbedingt, beispielsweise als Knickarmroboter mit sechs Drehachsen, einen zumindest annähernd kugelförmigen Arbeitsraum aufweist, alle auf den ersten Kurvenbahnabschnitten und zweiten Kurvenbahnabschnitten vorhandenen Quell-Behälter und/oder die Ziel-Behälter in gleicher Weise auf kurzen Wegen erreichen kann. Gegebenenfalls kann der Roboterarm bereits in einen Quell-Behälter und/oder Ziel-Behälter eingreifen, wenn dieser sich im ersten Kurvenbahnabschnitt oder im zweiten Kurvenbahnabschnitt noch in Bewegung befindet.

Des Weiteren kann aus einer Gruppe von mehreren Quell-Behältern und/oder Ziel-Behältern, die sich auf dem ersten Kurvenbahnabschnitt der ersten Förderbahn befinden, ein beliebiger einzelner Quell-Behälter und/oder Ziel-Behälter aus dieser Gruppe auf den zweiten Kurvenbahnabschnitt der zweiten Förderbahn transferiert werden. Es muss demgemäß nicht stets der am distalen Endabschnitt des ersten Kurvenbahnabschnitts befindliche in Förderrichtung vorderste Quell-Behälter und/oder Ziel-Behälter vor den folgenden Quell-Behältern und/oder Ziel-Behältern auf den zweiten Kurvenbahnabschnitt der zweiten Förderbahn transferiert werden. Dadurch kann das Wechseln von im Kommissionierbereich vorhandenen Quell-Behältern und/oder Ziel-Behältern besonders flexibel durchgeführt werden. Insbesondere das Sequenzieren der Quell-Behälter und/oder der Ziel-Behälter, um sie an einen Roboterarm in örtlicher und/oder zeitlicher Folge bereitzustellen, kann wichtig sein, um die Effektivität des Kommissionierens zu erhöhen. Speziell, wenn einzelne Stückgut-Objekte in einem Ziel-Behälter positions- und/oder lagevorbestimmt eingefügt werden soll, kann das Verfahren besonders zweckmäßig angewendet werden.

Ein automatische Aufnehmen von Stückgut-Objekten mittels eines von dem Roboterarm geführten Greifers, indem der Greifer das Stückgut-Objekt in einer bestimmten Greifpose automatisch aufnimmt, kann beispielsweise erfolgen, indem der Roboterarm mittels seines Greifers ein Stückgut-Objekt aus einem Quell-Behälter automatisch entnimmt. Die Stückgut-Objekte können in dem Quell-Behälter geordneten oder in ungeordneten Zuständen vorhanden sein. In einem solchen Fall kann beispielsweise mittels wenigstens eines optischen Sensors, wie beispielsweise wenigstens einer Kamera, und auf Basis einer Bildauswertung die Lage des zu greifenden Stückgut-Objekts in dem Quell-Behälter automatisch erfasst und der Greifer des Roboterarms derart auf Grundlage der erfassten Lage des Stückgut-Objekts angesteuert werden, so dass der Greifer das StückgutObjekt in einer bestimmten Greifpose aufnehmen kann. Die jeweilige Greifpose ist definiert durch die relative Position und Orientierung des Stückgut-Objekts bezüglich des Greifers, wenn der Greifer das Stückgut-Objekt gefasst hat. Die Stückgut-Objekte können anschließend in einem Ziel-Behälter geordneten oder in ungeordneten Zuständen automatisch durch den Roboterarm abgelegt werden.

Das Transferieren des auf der Zuführbahn in den Kommissionierbereich herangeförderten Quell-Behälters oder Ziel-Behälters aus dem bogenförmig verlaufenden ersten Kurvenbahnabschnitt der ersten Förderbahn in den neben dem ersten Kurvenbahnabschnitt der ersten Förderbahn liegenden, bogenförmig verlaufenden zweiten Kurvenbahnabschnitt der zweiten Förderbahn kann mittels eines automatisch angesteuerten, antreibbaren Querförderers oder Transferförderers erfolgen.

Das Verfahren kann vorsehen, dass der Querförderer einen Quell-Behälter oder Ziel-Behälter in einer radialen Richtung aus dem bogenförmig verlaufenden ersten Kurvenbahnabschnitt der ersten Förderbahn in den neben dem ersten Kurvenbahnabschnitt der ersten Förderbahn liegenden, bogenförmig verlaufenden zweiten Kurvenbahnabschnitt der zweiten Förderbahn bewegt. Ein Bewegen, d.h. ein Transferieren eines Quell-Behälters oder eines Ziel-Behälters kann entweder in einer Richtung radial nach außen oder in der umgekehrten Richtung radial nach innen erfolgen, je nachdem ob der bogenförmig verlaufende erste Kurvenbahnabschnitt der ersten Förderbahn bezüglich des bogenförmig verlaufenden zweiten Kurvenbahnabschnitts der zweiten Förderbahn radial innenliegend oder radial außenliegend konfiguriert ist.

Das Transferieren des auf der Zuführbahn in den Kommissionierbereich herangeförderten Quell-Behälters oder Ziel-Behälters aus dem bogenförmig verlaufenden ersten Kurvenbahnabschnitt der ersten Förderbahn in den neben dem ersten Kurvenbahnabschnitt der ersten Förderbahn liegenden, bogenförmig verlaufenden zweiten Kurvenbahnabschnitt der zweiten Förderbahn kann mittels des automatisch angesteuerten Roboters erfolgen oder mittels eines vom automatisch angesteuerten Roboter verschiedenen Hilfsroboterarms erfolgen.

In einer solchen Ausführungsvariante kann demgemäß ein Querförderer bzw. es können mehrere Querförderer durch den Roboterarm oder einen zusätzlichen Hilfsroboterarm ersetzt werden. Der Roboterarm bzw. der Hilfsroboterarm kann insoweit als ein Querförderer konfiguriert und programmtechnisch so eingerichtet sein, dass er die Aufgabe eines Querförderers durchführen kann. Dies hat den unter anderem den Vorteil, dass im Falle von mehreren Stellen, an denen eine Transferbewegung durchführbar sein soll, keine speziellen mehreren Querfördervorrichtungen angeordnet werden müssen, sondern es ausreichend ist, wenn ein einzelner Roboterarm oder Hilfsroboterarm die mehreren Querfördervorrichtungen ersetzt. Besonders kostengünstig kann dies realisiert werden, wenn gar kein zusätzlicher Hilfsroboterarm und gar keine speziellen Querfördervorrichtungen notwendig werden, sondern der für das Kommissionieren zuständige Roboterarm auch das Transferieren der Quell-Behälter und/oder der Ziel-Behälter durchführt. Ist jedoch der für das Kommissionieren zuständige Roboterarm bereits durch das Kommissionieren ausgelastet, so ist es sicherlich sinnvoll, wenn separate Querfördervorrichtungen oder ein zusätzlicher Hilfsroboterarm vorgesehen werden. Eine einfache Bauart einer Querfördervorrichtung kann beispielsweise ein Pusher sein. Dieser ermöglicht ein Querabschieben eines Quell-Behälters oder eines Ziel-Behälters durch eine einfache, insbesondere lineare Schubbewegung.

Die Schritte des Verfahrens, insbesondere auch der verschiedenen Varianten des Verfahrens, können statt mittels dedizierter Förderbahnen und/oder dedizierter Querfördervorrichtungen alternativ auch mittels eines omnidirektionalen Fördertisches durchgeführt wird, der sich im Kommissionierbereich über den Arbeitsbereich des Roboterarms erstreckt.

Der omnidirektionale Fördertisch kann beispielsweise analog eines omnidirektionalen Fördertisches gemäß US 5 556 246 A oder gemäß EP 2 874 923 B1 ausgebildet sein.

Der omnidirektionale Fördertisch kann eine Vielzahl von omnidirektionalen Förderelementen aufweisen, wobei die omnidirektionalen Förderelemente in Mustern, insbesondere in gleichmäßigen Mustern, wie beispielsweise in Reihen und Spalten oder in Gitterstrukturen oder Wabenstrukturen angeordnet sein können. Die mehreren omnidirektionalen Förderelemente liegen dabei in einer gemeinsamen Ebene und definieren die Oberfläche des omnidirektionalen Fördertisches auf dem Behälter, insbesondere die Quell-Behälter und Ziel-Behälter, an sich auf frei programmierbaren Bahnen automatisch bewegt werden können. Dazu sind die omnidirektionalen Förderelemente einzeln oder in Gruppen automatisch ansteuerbar, um eine frei vorgegebene Bewegungsrichtung vorzugeben. Mehrere benachbarte omnidirektionale Förderelemente können dabei derart zusammenwirken, dass ein Summenbewegungsvektor gebildet wird, nach dem sich ein Behälter auf dem omnidirektionalen Fördertisch dann bewegt. So kann ein beliebiger Behälter wahlweise eine geradlinige Bewegung auf dem omnidirektionalen Fördertisch ausführen, eine bogenförmige Bewegung auf dem omnidirektionalen Fördertisch ausführen oder sogar auf der Stelle gedreht bzw. gewendet werden.

Die omnidirektionalen Förderelemente umfassen jeweils mehrere Antriebselemente, um eine Antriebskraft auf einen darauf abgestellten Behälter übertragen zu können, und mehrere automatisch ansteuerbare Motoren, welche die Antriebselemente individuell ansteuern können. Die Motoren der mehreren omnidirektionalen Förderelemente können durch eine Fördertisch-Steuervorrichtung automatisch angesteuert werden. Die Fördertisch-Steuervorrichtung kann dazu konfiguriert und programmtechnisch eingerichtet sein, die verfahrensgemäßen Bewegungen für die Quell-Behälter und/oder die Ziel-Behälter in Form von ersten Kurvenbahnen, die eine erste Förderbahn simulieren, von zweiten Kurvenbahnen, die eine zweite Förderbahn simulieren und in Form von Transferbewegungsbahnen, welche insofern einen Querförderer simulieren können, vorzugeben.

Dies hat den Vorteil, dass die ersten Kurvenbahnen, die zweiten Kurvenbahnen und die Transferbewegungsbahnen freier und somit flexibler programmiert werden können, als dies mit gerichteten Förderbahnen bzw. mechanischen Förderbahnen und mechanischen Querförderern möglich ist. So können beispielsweise die Kurvenradien, auf denen die Behälter sich entlang einer Kurvenbahn bewegen, dynamisch geändert werden, so dass die durch den omnidirektionalen Fördertisch bewegten Behälter sich auf variablen Krümmungsbahnen bewegen können. Gegebenenfalls kann die Transferbewegungsbahn dann statt eine reine radiale Bewegungsrichtung aufzuweisen, auch eine zusätzliche in Umfangsrichtung laufende Bewegungskomponente mit umfassen. Demgemäß kann sich ein Behälter dann gegebenenfalls auf einer spiralförmigen Bewegungsbahn bewegen, um die Transferbewegung auszuführen. Auf dem ersten Kurvenbahnabschnitt und auf dem zweiten Kurvenbahnabschnitt kann sicherlich einer Bewegungsbahn für die Behälter der Vorzug gegeben werden, die einen konstanten Krümmungsradius aufweist. So können die Behälter in konstanten Abständen bezüglich des Roboterarms um den Roboterarm herum bewegt werden.

In einer speziellen Weiterentwicklung kann das Verfahren demgemäß gekennzeichnet sein durch die Schritte:
- Heranfördern des Quell-Behälters oder des Ziel-Behälters an den Kommissionierbereich auf der ersten Förderbahn, wobei der Quell-Behälter oder der Ziel-Behälter im Kommissionierbereich dadurch entlang des bogenförmig verlaufenden ersten Kurvenbahnabschnitts der ersten Förderbahn in den Arbeitsbereich des Roboterarms bewegt wird, indem zumindest der erste Kurvenbahnabschnitt von dem omnidirektionalen Fördertisch gebildet wird, der eine Vielzahl von individuell oder in Gruppen antreibbarer Omnidirektional-Fördereinheiten aufweist, die derart angesteuert werden, dass ein herangeförderter Quell-Behälter oder Ziel-Behälter auf dem omnidirektionalen Fördertisch automatisch auf einer ersten Trajektorie bewegt wird, die den bogenförmig verlaufenden ersten Kurvenbahnabschnitt bildet,
- automatisches Transferieren des auf der Zuführbahn in den Kommissionierbereich herangeförderten Quell-Behälters oder Ziel-Behälters einer Position auf der ersten Trajektorie in eine Position auf einer zweiten Trajektorie, die neben der ersten Trajektorie verläuft, indem die Omnidirektional-Fördereinheiten derart angesteuert werden, dass ein zu transferierender Quell-Behälter oder ZielBehälter auf dem omnidirektionalen Fördertisch automatisch radial von der ersten Trajektorie auf die zweite Trajektorie bewegt wird, die den bogenförmig verlaufenden zweiten Kurvenbahnabschnitt bildet, und
- Wegfördern des Quell-Behälters oder des Ziel-Behälters aus dem Kommissionierbereich auf einer zweiten Förderbahn, die entlang der zweiten Trajektorie führt, wobei der Quell-Behälter oder der Ziel-Behälter im Kommissionierbereich dadurch entlang des bogenförmig verlaufenden zweiten Kurvenbahnabschnitts der zweiten Förderbahn aus dem Arbeitsbereich des Roboterarms herausbewegt wird, indem zumindest der zweite Kurvenbahnabschnitt von dem omnidirektionalen Fördertisch gebildet wird, dessen Omnidirektional-Fördereinheiten derart angesteuert werden, dass ein wegzufördernder Quell-Behälter oder Ziel-Behälter auf dem omnidirektionalen Fördertisch automatisch entlang der zweiten Trajektorie bewegt wird.

In einer alternativen oder ergänzenden Weiterentwicklung kann das Verfahren gekennzeichnet sein durch die Schritte:
- Heranfördern eines Quell-Behälters an den Kommissionierbereich im Arbeitsbereich des Roboterarms auf einem bogenförmig um den Roboterarm herum verlaufenden ersten Quell-Behälter-Kurvenbahnabschnitt einer ersten Quell-Behälter-Förderbahn, bei welcher der erste Quell-Behälter-Kurvenbahnabschnitt eine Quell-Behälter-Zuführbahn bildet,
- Heranfördern eines Ziel-Behälters an den Kommissionierbereich im Arbeitsbereich des Roboterarms auf einem bogenförmig um den Roboterarm herum verlaufenden ersten Ziel-Behälter-Kurvenbahnabschnitt einer ersten Ziel-Behälter-Förderbahn, bei welcher der erste Ziel-Behälter-Kurvenbahnabschnitt eine Ziel-Behälter-Zuführbahn bildet,

- Automatisches Umsetzen wenigstens eines Stückgut-Objektes aus dem Quell-Behälter in den ZielBehälter mittels des Roboterarms, vor oder nach einem automatischen Transferierens des Quell-Behälters und/oder des Ziel-Behälters,
- automatisches Transferieren des auf der Quell-Behälter-Zuführbahn in den Kommissionierbereich herangeförderten Quell-Behälters aus dem bogenförmig verlaufenden ersten Quell-Behälter-Kurvenbahnabschnitt der ersten Quell-Behälter-Förderbahn in einen neben dem ersten Quell-Behälter-Kurvenbahnabschnitt der ersten Quell-Behälter-Förderbahn liegenden, bogenförmig verlaufenden zweiten Quell-Behälter-Kurvenbahnabschnitt einer zweiten Quell-Behälter-Förderbahn, die eine Quell-Behälter-Abführbahn bildet,
- automatisches Transferieren des auf der ZielBehälter-Zuführbahn in den Kommissionierbereich herangeförderten Ziel-Behälters aus dem bogenförmig verlaufenden ersten Ziel-Behälter-Kurvenbahnabschnitt der ersten Ziel-Behälter-Förderbahn in einen neben dem ersten Ziel-Behälter-Kurvenbahnabschnitt der ersten Ziel-Behälter-Förderbahn liegenden, bogenförmig verlaufenden zweiten Ziel-Behälter-Kurvenbahnabschnitt einer zweiten Ziel-Behälter-Förderbahn, die eine ZielBehälter-Abführbahn bildet,
- Wegfördern des Quell-Behälters aus dem Kommissionierbereich auf der zweiten Quell-Behälter-Förderbahn, wobei der Quell-Behälter im Kommissionierbereich entlang des bogenförmig verlaufenden zweiten Quell-Behälter-Kurvenbahnabschnitts der zweiten Quell-Behälter-Förderbahn aus dem Arbeitsbereich des Roboterarms herausbewegt wird,
- Wegfördern des Ziel-Behälters aus dem Kommissionierbereich auf der zweiten Ziel-Behälter-Förderbahn, wobei der Ziel-Behälter im Kommissionierbereich entlang des bogenförmig verlaufenden zweiten Ziel-Behälter-Kurvenbahnabschnitts der zweiten Ziel-Behälter-Förderbahn aus dem Arbeitsbereich des Roboterarms herausbewegt wird.

Bei dem soeben beschriebenen Verfahren kann das automatische Transferieren des Quell-Behälters an einem distalen Endabschnitt des ersten Quell-Behälter-Kurvenbahnabschnitts und des zweiten Quell-Behälter-Kurvenbahnabschnitts durchgeführt werden, welcher distale Endabschnitt entfernt von einem gegenüberliegenden Anschlussabschnitt des ersten Quell-Behälter-Kurvenbahnabschnitts und des zweiten Quell-Behälter-Kurvenbahnabschnitts angeordnet ist, an welchen Anschlussförderbahnen an die erste Quell-Behälter-Förderbahn und zweite Quell-Behälter-Förderbahn angeschlossen sind, und/oder das automatische Transferieren des Ziel-Behälters an einem distalen Endabschnitt des ersten Ziel-Behälter-Kurvenbahnabschnitts und des zweiten Ziel-Behälter-Kurvenbahnabschnitts durchgeführt wird, welcher distale Endabschnitt entfernt von einem gegenüberliegenden Anschlussabschnitt des ersten Ziel-Behälter-Kurvenbahnabschnitts und des zweiten Ziel-Behälter-Kurvenbahnabschnitts angeordnet ist, an welchen Anschlussförderbahnen an die erste Ziel-Behälter-Förderbahn und zweite Ziel-Behälter-Förderbahn angeschlossen sind.

Alternativ kann das automatische Transferieren des Quell-Behälters an einem proximalen Anschlussabschnitt des ersten Quell-Behälter-Kurvenbahnabschnitts und des zweiten Quell-Behälter-Kurvenbahnabschnitts durchgeführt werden, welcher proximalen Anschlussabschnitt entfernt von einem gegenüberliegenden Endabschnitt des ersten Quell-Behälter-Kurvenbahnabschnitts und des zweiten Quell-Behälter-Kurvenbahnabschnitts angeordnet ist, wobei an dem proximalen Anschlussabschnitt Anschlussförderbahnen an die erste Quell-Behälter-Förderbahn und zweite Quell-Behälter-Förderbahn angeschlossen sind, und/oder das automatische Transferieren des Ziel-Behälters an einem proximalen Anschlussabschnitt des ersten Ziel-Behälter-Kurvenbahnabschnitts und des zweiten Ziel-Behälter-Kurvenbahnabschnitts durchgeführt wird, welcher proximalen Anschlussabschnitt entfernt von einem gegenüberliegenden Endabschnitt des ersten Ziel-Behälter-Kurvenbahnabschnitts und des zweiten Ziel-Behälter-Kurvenbahnabschnitts angeordnet ist, wobei an dem proximalen Anschlussabschnitt Anschlussförderbahnen an die erste ZielBehälter-Förderbahn und zweite Ziel-Behälter-Förderbahn angeschlossen sind.

Der erste Quell-Behälter-Kurvenbahnabschnitt und der zweite Quell-Behälter-Kurvenbahnabschnitt können sich über denselben Quell-Behälter-Winkelbereich erstrecken, der erste ZielBehälter-Kurvenbahnabschnitt und der zweite Ziel-Behälter-Kurvenbahnabschnitt sich über denselben Ziel-Behälter-Winkelbereich erstrecken, und der Quell-Behälter-Winkelbereich kann von dem Ziel-Behälter-Winkelbereich verschieden sein, so dass im Arbeitsbereich des Roboterarms eine unterschiedliche Anzahl von Quell-Behältern und Ziel-Behältern positioniert werden können.

Die erfindungsgemäße Aufgabe wird auch gelöst durch eine Förderanlage zum Fördern von Transport-Behältern auf Förderbahnen, insbesondere zur Durchführung eines Verfahrens nach einem der beschriebenen Ausführungsformen, aufweisend:
- wenigstens eine erste Förderbahn, die als eine Zuführbahn ausgebildet und eingerichtet ist, zum Heranfördern von Transport-Behältern an einen Kommissionierbereich der Förderanlage,
- wenigstens eine zweite Förderbahn, die als eine Abführbahn ausgebildet und eingerichtet ist, zum Wegfördern von Transport-Behältern aus dem Kommissionierbereich der Förderanlage,
- wobei der Kommissionierbereich der Förderanlage durch einen bogenförmig verlaufenden ersten Kurvenbahnabschnitt der ersten Förderbahn und einen neben dem ersten Kurvenbahnabschnitt der ersten Förderbahn bogenförmig verlaufenden zweiten Kurvenbahnabschnitt der zweiten Förderbahn gebildet wird, und aufweisend
- einen antreibbaren Querförderer der ausgebildet und eingerichtet ist zum aktiven Transferieren eines jeweiligen Transport-Behälters zwischen dem ersten Kurvenbahnabschnitt der ersten Förderbahn und dem zweiten Kurvenbahnabschnitt der zweiten Förderbahn.

Die erste Förderbahn und/oder die zweite Förderbahn können jeweils als eine Rollenbahn ausgebildet sein. Jede Rollenbahn kann dazu eine Vielzahl von aufeinanderfolgender Rollen aufweisen, die mit ihren Drehachsen zumindest im Wesentlichen parallel zueinander ausgerichtet und in gleichmäßigen Abständen voneinander angeordnet sind. Die Rollen können, je nach Anforderung, angetrieben oder unangetrieben ausgebildet sein.

Alternativ zu Rollenbahnen können die erste Förderbahn und/oder die zweite Förderbahn jeweils auch als ein Bandförderer ausgebildet sein.

Der Querförderer kann beispielsweise als wenigstens ein Riemen- oder Kettenhubumsetzer ausgebildet sein. Der Querförderer kann in einer speziellen Ausführungsart auch als Rollenbahn-Umsetzer bezeichnet werden. Dabei können in einem entsprechenden Bahnabschnitt einer Rollenbahn jeweils zwischen zwei unmittelbar benachbarten Rollen ein Umsetzerschwert angeordnet sein, das zwischen einer Verwahrungsstellung, in welcher das Umsetzerschwert unterhalb einer Tragebene der Rollen verborgen ist, und einer Betriebsstellung, in welcher das Umsetzerschwert über die Tragebene der Rollen nach oben hinaussteht, so dass ein dort angeordneter Behälter von den tragenden Rollen abgehoben wird und auf dem Umsetzerschwert zu stehen kommt, automatisch verstellbar gelagert sein kann. Der jeweilige Querförderer kann zwei oder mehr Umsetzerschwerter aufweisen, welche einen Transport-Behälter gemeinsam aufnehmen können, um ihn von der ersten Förderbahn auf die zweite Förderbahn umzusetzen.

Die wenigstens eine erste Förderbahn kann demgemäß von einer ersten Rollenbahn gebildet werden, die eine Vielzahl von in Förderrichtung gleichmäßig voneinander beabstandete, drehantreibbare erste Rollen aufweist, die wenigstens eine zweite Förderbahn kann von einer zweiten Rollenbahn gebildet werden, die eine Vielzahl von in Förderrichtung gleichmäßig voneinander beabstandete, drehantreibbare zweite Rollen aufweist, und/oder der antreibbare Querförderer kann von wenigstens einem jeweils zwischen zwei benachbarten Rollen der ersten Förderbahn und/oder der zweiten Förderbahn angeordneten Riemenoder Kettenhubumsetzer gebildet werden.

Der erste Kurvenbahnabschnitt der ersten Rollenbahn und der zweite Kurvenbahnabschnitt der zweiten Rollenbahn können parallel nebeneinander verlaufend angeordnet sein, derart dass der erste Kurvenbahnabschnitt und der zweite Kurvenbahnabschnitt auf zwei verschiedenen, konzentrischen Kreisbahnen unterschiedlicher Radien liegen.

Der Roboterarm kann vorzugsweise im Zentrum der beiden Kreisbahnen positioniert sein, auf denen der erste Kurvenbahnabschnitt der ersten Rollenbahn und der zweite Kurvenbahnabschnitt zweiten Rollenbahn liegen.

So können sämtliche auf dem ersten Kurvenbahnabschnitt und dem zweiten Kurvenbahnabschnitt vorhandenen Quell-Behälter und/oder Ziel-Behälter in gleicher Weise durch den Roboterarm erreicht werden. Im Falle eines Sechsachs-Knickarmroboter kann der Endeffektor des Roboterarms beispielsweise in einfacher Weise auf der gesamten Strecke des ersten Kurvenbahnabschnitts und/oder des zweiten Kurvenbahnabschnitts bewegt werden, indem die proximale erste Drehachse (Karussell des Roboterarms) automatisch gedreht wird. Dabei können die weiteren Drehachsen (zwei bis sechs) unveränderte Drehstellungen beibehalten.

Die wenigstens eine erste Förderbahn und/oder der erste Kurvenbahnabschnitt können von einem omnidirektionalen Fördertisch gebildet werden, der eine Vielzahl von individuell oder in Gruppen antreibbarer Omnidirektional-Fördereinheiten aufweist, die derart ansteuerbar sind, dass ein herangeförderter Quell-Behälter oder Ziel-Behälter auf dem omnidirektionalen Fördertisch automatisch auf einer ersten Trajektorie bewegbar ist, welche die erste Förderbahn und/oder den bogenförmig verlaufenden ersten Kurvenbahnabschnitt bildet, und die wenigstens eine zweite Förderbahn und/oder der zweite Kurvenbahnabschnitt von dem omnidirektionalen Fördertisch gebildet wird, dessen Omnidirektional-Fördereinheiten derart ansteuerbar sind, dass ein wegzufördernder Quell-Behälter oder ZielBehälter auf dem omnidirektionalen Fördertisch automatisch entlang einer zweiten Trajektorie bewegbar ist, welche die zweite Förderbahn und/oder den bogenförmig verlaufenden zweiten Kurvenbahnabschnitt bildet, und/oder der antreibbare Querförderer von dem omnidirektionalen Fördertisch gebildet wird, dessen Omnidirektional-Fördereinheiten derart ansteuerbar sind, dass ein automatisch zu transferierender Quell-Behälter oder Ziel-Behälter auf dem omnidirektionalen Fördertisch automatisch radial zur ersten Trajektorie und zweiten Trajektorie aus einer Position auf der ersten Trajektorie in eine Position auf der zweiten Trajektorie bewegbar ist.

Der omnidirektionale Fördertisch kann eine Vielzahl von omnidirektionalen Förderelementen aufweisen, wobei die omnidirektionalen Förderelemente in Mustern, insbesondere in gleichmäßigen Mustern, wie beispielsweise in Reihen und Spalten oder in Gitterstrukturen oder Wabenstrukturen angeordnet sein können. Die mehreren omnidirektionalen Förderelemente liegen dabei in einer gemeinsamen Ebene und definieren die Oberfläche des omnidirektionalen Fördertisches auf dem Behälter, insbesondere die Quell-Behälter und Ziel-Behälter, an sich auf frei programmierbaren Bahnen automatisch bewegt werden können. Dazu sind die omnidirektionalen Förderelemente einzeln oder in Gruppen automatisch ansteuerbar, um eine frei vorgegebene Bewegungsrichtung vorzugeben. Mehrere benachbarte omnidirektionale Förderelemente können dabei derart zusammenwirken, dass ein Summenbewegungsvektor gebildet wird, nach dem sich ein Behälter auf dem omnidirektionalen Fördertisch dann bewegt. So kann ein beliebiger Behälter wahlweise eine geradlinige Bewegung auf dem omnidirektionalen Fördertisch ausführen, eine bogenförmige Bewegung auf dem omnidirektionalen Fördertisch ausführen oder sogar auf der Stelle gedreht bzw. gewendet werden.

Die omnidirektionalen Förderelemente umfassen jeweils mehrere Antriebselemente, um eine Antriebskraft auf einen darauf abgestellten Behälter übertragen zu können, und mehrere automatisch ansteuerbare Motoren, welche die Antriebselemente individuell ansteuern können. Die Motoren der mehreren omnidirektionalen Förderelemente können durch eine Fördertisch-Steuervorrichtung automatisch angesteuert werden. Die Fördertisch-Steuervorrichtung kann dazu konfiguriert und programmtechnisch eingerichtet sein, die verfahrensgemäßen Bewegungen für die Quell-Behälter und/oder die Ziel-Behälter in Form von ersten Kurvenbahnen, die eine erste Förderbahn simulieren, von zweiten Kurvenbahnen, die eine zweite Förderbahn simulieren und in Form von Transferbewegungsbahnen, welche insofern einen Querförderer simulieren können, vorzugeben.

Dies hat den Vorteil, dass die ersten Kurvenbahnen, die zweiten Kurvenbahnen und die Transferbewegungsbahnen freier und somit flexibler programmiert werden können, als dies mit mechanischen Förderbahnen und mechanischen Querförderern möglich ist. So können beispielsweise die Kurvenradien, auf denen die Behälter sich entlang einer Kurvenbahn bewegen, dynamisch geändert werden, so dass die durch den omnidirektionalen Fördertisch bewegten Behälter sich auf variablen Krümmungsbahnen bewegen können. Gegebenenfalls kann die Transferbewegungsbahn dann statt eine reine radiale Bewegungsrichtung aufzuweisen, auch eine zusätzliche in Umfangsrichtung laufende Bewegungskomponente mit umfassen. Demgemäß kann sich ein Behälter dann gegebenenfalls auf einer spiralförmigen Bewegungsbahn bewegen, um die Transferbewegung auszuführen. Auf dem ersten Kurvenbahnabschnitt und auf dem zweiten Kurvenbahnabschnitt kann sicherlich einer Bewegungsbahn für die Behälter der Vorzug gegeben werden, die einen konstanten Krümmungsradius aufweist. So können die Behälter in konstanten Abständen bezüglich des Roboterarms um den Roboterarm herum bewegt werden.

Die Aufgabe wird außerdem gelöst durch ein Computerprogrammprodukt, aufweisend einen maschinenlesbaren Träger, auf dem Programmcode gespeichert ist, der von einer Kommissioniersteuerung einer Förderanlage, insbesondere einer Förderanlage nach einem der beschriebenen Ausführungsformen, auslesbar ist und der die Kommissioniersteuerung ausbildet und/oder einrichtet, ein Verfahren nach einem der beschriebenen Ausführungsformen durchzuführen, wenn der Programmcode von der Kommissioniersteuerung ausgeführt wird.

Das Computerprogrammprodukt kann beispielsweise eine CD, eine DVD oder ein USB-Stick sein. Das Computerprogrammprodukt kann aber auch eine Steuerungskarte sein, auf der Mikroprozessoren eingebunden sind. Das Computerprogrammprodukt kann jedoch auch in Form eines Downloads realisiert sein, der über das Internet oder ein anderes Netzwerk angeboten und verkauft werden kann.

Der maschinenlesbare Träger kann somit eine CD, eine DVD oder ein Mikroprozessor sein, auf dem der Programmcode gespeichert ist. Der maschinenlesbare Träger kann aber auch eine Festplatte oder ein SSD-Laufwerk sein, auf das der Programmcode heruntergeladen wurde, beispielsweise mittels eines Downloads, insbesondere in Form von Datenpaketen.

Der Programmcode kann durch ein editiertes Programm und/oder Daten repräsentiert sein, die auf dem maschinenlesbaren Träger gespeichert sind.

Durch ein Auslesen des editierten Programms und/oder der Daten wird die auslesende Kommissioniersteuerung ausgebildet und/oder eingerichtet, das erfindungsgemäße Verfahren ausführen zu können, indem sie die erfindungsgemäße Förderanlage ansteuert, um die Quell-Behälter und/oder Ziel-Behälter entsprechend zu bewegen.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: ein Flussdiagramm der Schritte in dem grundlegenden erfindungsgemäßen Verfahren,
- Fig. 2: eine schematische Darstellung einer ersten beispielhaften Ausführungsform einer Förderanlage, insbesondere zur Durchführung des erfindungsgemäßen Verfahrens,
- Fig. 3: eine schematische Darstellung einer zweiten beispielhaften Ausführungsform einer Förderanlage, insbesondere zur Durchführung des erfindungsgemäßen Verfahrens,
- Fig. 4: eine schematische Darstellung einer dritten beispielhaften Ausführungsform einer Förderanlage, insbesondere zur Durchführung des erfindungsgemäßen Verfahrens,
- Fig. 5: eine schematische Darstellung einer vierten beispielhaften Ausführungsform einer Förderanlage, insbesondere zur Durchführung des erfindungsgemäßen Verfahrens, und
- Fig. 6: eine schematische Darstellung einer speziellen Ausführungsform einer Förderanlage in der Bauart eines omnidirektionalen Fördertisches, insbesondere zur Durchführung des erfindungsgemäßen Verfahrens.

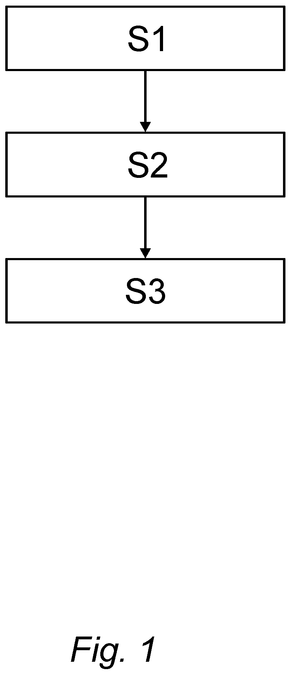

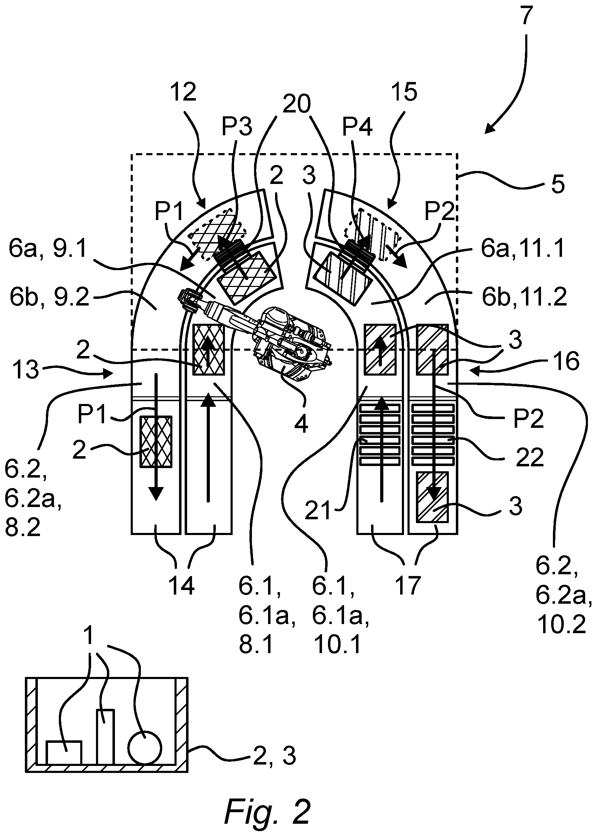

In der Fig. 1 ist das grundlegende erfindungsgemäße Verfahren zum automatischen Kommissionieren von Stückgut-Objekten 1 aus Quell-Behältern 2 in Ziel-Behälter 3 mittels eines automatisch angesteuerten Roboterarms 4 in einem Kommissionierbereich 5, in einem Flussdiagramm der Schritte dargestellt. Die in Fig. 1 nicht aufgezeigten Bezugszeichen sind aus Fig. 2 bis Fig. 6 zu entnehmen.

In einem ersten Schritt S1 des Verfahren erfolgt ein Heranfördern eines Quell-Behälters 2 oder eines Ziel-Behälters 3 an den Kommissionierbereich 5 auf einer ersten Förderbahn 6.1, die als eine Zuführbahn eingerichtet ist, wobei der Quell-Behälter 2 oder der Ziel-Behälter 3 im Kommissionierbereich 5 entlang eines bogenförmig verlaufenden ersten Kurvenbahnabschnitts 6a der ersten Förderbahn 6.1 in einen Arbeitsbereich des Roboterarms 4 bewegt wird.

In einem zweiten Schritt S2 des Verfahren erfolgt ein automatisches Transferieren des auf der Zuführbahn in den Kommissionierbereich 5 herangeförderten Quell-Behälters 2 oder Ziel-Behälters 3 aus dem bogenförmig verlaufenden ersten Kurvenbahnabschnitt 6a der ersten Förderbahn 6.1 in einen neben dem ersten Kurvenbahnabschnitt 6a der ersten Förderbahn 6.1 liegenden, bogenförmig verlaufenden zweiten Kurvenbahnabschnitt 6b einer zweiten Förderbahn 6.2, die eine Abführbahn bildet.

In einem dritten Schritt S3 des Verfahren erfolgt ein Wegfördern des Quell-Behälters 2 oder des Ziel-Behälters 3 aus dem Kommissionierbereich 5 auf der zweiten Förderbahn 6.2, wobei der Quell-Behälter 2 oder der Ziel-Behälter 3 im Kommissionierbereich 5 entlang des bogenförmig verlaufenden zweiten Kurvenbahnabschnitts 6b der zweiten Förderbahn 6.2 aus dem Arbeitsbereich des Roboterarms 4 herausbewegt wird.

Die Fig. 2 bis Fig. 6 veranschaulichen anhand konkreter Konfigurationen einer jeweiligen Förderanlage 7, wie das jeweilige Verfahren durchgeführt werden kann.

Das Heranfördern eines Quell-Behälters 2 an den Kommissionierbereich 5 im Arbeitsbereich des Roboterarms 4 kann auf einem bogenförmig um den Roboterarm 4 herum verlaufenden ersten Quell-Behälter-Kurvenbahnabschnitt 9.1 einer ersten Quell-Behälter-Förderbahn 8.1 stattfinden, bei welcher der erste Quell-Behälter-Kurvenbahnabschnitt 9.1 eine Quell-Behälter-Zuführbahn bildet.

Das Heranfördern eines Ziel-Behälters 3 an den Kommissionierbereich 5 im Arbeitsbereich des Roboterarms 4 kann auf einem bogenförmig um den Roboterarm 4 herum verlaufenden ersten Ziel-Behälter-Kurvenbahnabschnitt 11.1 einer ersten ZielBehälter-Förderbahn 10.1 stattfinden, bei welcher der erste Ziel-Behälter-Kurvenbahnabschnitt 11.1 eine Ziel-Behälter-Zuführbahn bildet.

Das automatische Umsetzen wenigstens eines Stückgut-Objektes 1 aus dem Quell-Behälter 2 in den Ziel-Behälter 3 mittels des Roboterarms 4 kann beispielsweise vor einem automatischen Transferierens des Quell-Behälters 2 und des Ziel-Behälters 3 erfolgen.

Das automatische Transferieren des auf der Quell-Behälter-Zuführbahn in den Kommissionierbereich 5 herangeförderten Quell-Behälters 2 aus dem bogenförmig verlaufenden ersten Quell-Behälter-Kurvenbahnabschnitt 9.1 der ersten Quell-Behälter-Förderbahn 8.1 kann in einen neben dem ersten Quell-Behälter-Kurvenbahnabschnitt 9.1 der ersten Quell-Behälter-Förderbahn 8.1 liegenden, bogenförmig verlaufenden zweiten Quell-Behälter-Kurvenbahnabschnitt 9.2 einer zweiten Quell-Behälter-Förderbahn 8.2 erfolgen, die eine Quell-Behälter-Abführbahn bildet.

Entsprechend kann auch das automatische Transferieren des auf der Ziel-Behälter-Zuführbahn in den Kommissionierbereich 5 herangeförderten Ziel-Behälters 3 aus dem bogenförmig verlaufenden ersten Ziel-Behälter-Kurvenbahnabschnitt 11.1 der ersten Ziel-Behälter-Förderbahn 10.1 in einen neben dem ersten Ziel-Behälter-Kurvenbahnabschnitt 11.1 der ersten ZielBehälter-Förderbahn 10.1 liegenden, bogenförmig verlaufenden zweiten Ziel-Behälter-Kurvenbahnabschnitt 11.2 einer zweiten Ziel-Behälter-Förderbahn 10.2 erfolgen, die eine ZielBehälter-Abführbahn bildet.

Das Wegfördern des Quell-Behälters 2 aus dem Kommissionierbereich 5 auf der zweiten Quell-Behälter-Förderbahn 8.2 findet statt, indem der Quell-Behälter 2 im Kommissionierbereich 5 entlang des bogenförmig verlaufenden zweiten Quell-Behälter-Kurvenbahnabschnitts 9.2 der zweiten Quell-Behälter-Förderbahn 8.2 aus dem Arbeitsbereich des Roboterarms 4 herausbewegt wird, wie dies durch die Pfeile P1 angedeutet ist.

Entsprechend findet ein Wegfördern des Ziel-Behälters 3 aus dem Kommissionierbereich 5 auf der zweiten Ziel-Behälter-Förderbahn 10.2 statt, indem der Ziel-Behälter 3 im Kommissionierbereich 5 entlang des bogenförmig verlaufenden zweiten Ziel-Behälter-Kurvenbahnabschnitts 11.2 der zweiten ZielBehälter-Förderbahn 10.2 aus dem Arbeitsbereich des Roboterarms 4 herausbewegt wird, wie dies durch die Pfeile P2 angedeutet ist.

Im Falle der ersten Ausführungsform gemäß Fig. 2 erfolgt das automatische Transferieren des Quell-Behälters 2 an einem distalen Endabschnitt 12 des ersten Quell-Behälter-Kurvenbahnabschnitts 9.1 und des zweiten Quell-Behälter-Kurvenbahnabschnitts 9.2, wie dies durch den Pfeil P3 angedeutet ist, welcher distale Endabschnitt 12 entfernt von einem gegenüberliegenden Anschlussabschnitt 13 des ersten Quell-Behälter-Kurvenbahnabschnitts 9.1 und des zweiten Quell-Behälter-Kurvenbahnabschnitts 9.2 angeordnet ist, an welchen Anschlussförderbahnen 14 an die erste Quell-Behälter-Förderbahn 8.1 und zweite Quell-Behälter-Förderbahn 8.2 angeschlossen sind.

In gleicher Weise erfolgt im Falle der ersten Ausführungsform gemäß Fig. 2 das automatische Transferieren des Ziel-Behälters 3 an einem distalen Endabschnitt 15 des ersten Ziel-Behälter-Kurvenbahnabschnitts 11.1 und des zweiten ZielBehälter-Kurvenbahnabschnitts 11.2, wie dies durch den Pfeil P4 angedeutet ist, welcher distale Endabschnitt 15 entfernt von einem gegenüberliegenden Anschlussabschnitt 16 des ersten Ziel-Behälter-Kurvenbahnabschnitts 11.1 und des zweiten ZielBehälter-Kurvenbahnabschnitts 11.2 angeordnet ist, an welchen Anschlussförderbahnen 17 an die erste Ziel-Behälter-Förderbahn 10.1 und zweite Ziel-Behälter-Förderbahn 10.2 angeschlossen sind.

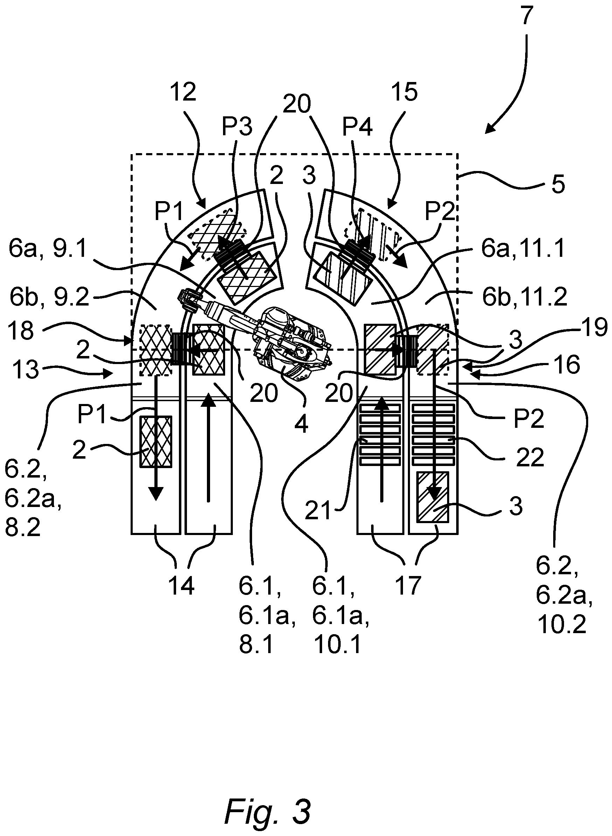

In einer Abwandlung kann in der zweiten Ausführungsform gemäß Fig. 3 das automatische Transferieren des Quell-Behälters 2 zusätzlich an einem proximalen Anschlussabschnitt 18 des ersten Quell-Behälter-Kurvenbahnabschnitts 9.1 und des zweiten Quell-Behälter-Kurvenbahnabschnitts 9.2 durchgeführt werden, welcher proximalen Anschlussabschnitt 18 entfernt von dem gegenüberliegenden Endabschnitt 12 des ersten Quell-Behälter-Kurvenbahnabschnitts 9.1 und des zweiten Quell-Behälter-Kurvenbahnabschnitts 9.2 angeordnet ist, wobei an dem proximalen Anschlussabschnitt 18 die Anschlussförderbahnen 14 an die erste Quell-Behälter-Förderbahn 8.1 und zweite Quell-Behälter-Förderbahn 8.2 angeschlossen sind.

In gleicher Weise erfolgt im Falle der zweiten Ausführungsform gemäß Fig. 3 das automatische Transferieren des Ziel-Behälters 3 an einem proximalen Anschlussabschnitt 19 des ersten Ziel-Behälter-Kurvenbahnabschnitts 11.1 und des zweiten Ziel-Behälter-Kurvenbahnabschnitts 11.2, welcher proximalen Anschlussabschnitt 19 entfernt von dem gegenüberliegenden Endabschnitt 15 des ersten Ziel-Behälter-Kurvenbahnabschnitts 11.1 und des zweiten Ziel-Behälter-Kurvenbahnabschnitts 11.2 angeordnet ist, wobei an dem proximalen Anschlussabschnitt 19 die Anschlussförderbahnen 17 an die erste Ziel-Behälter-Förderbahn 10.1 und zweite Ziel-Behälter-Förderbahn 10.2 angeschlossen sind.

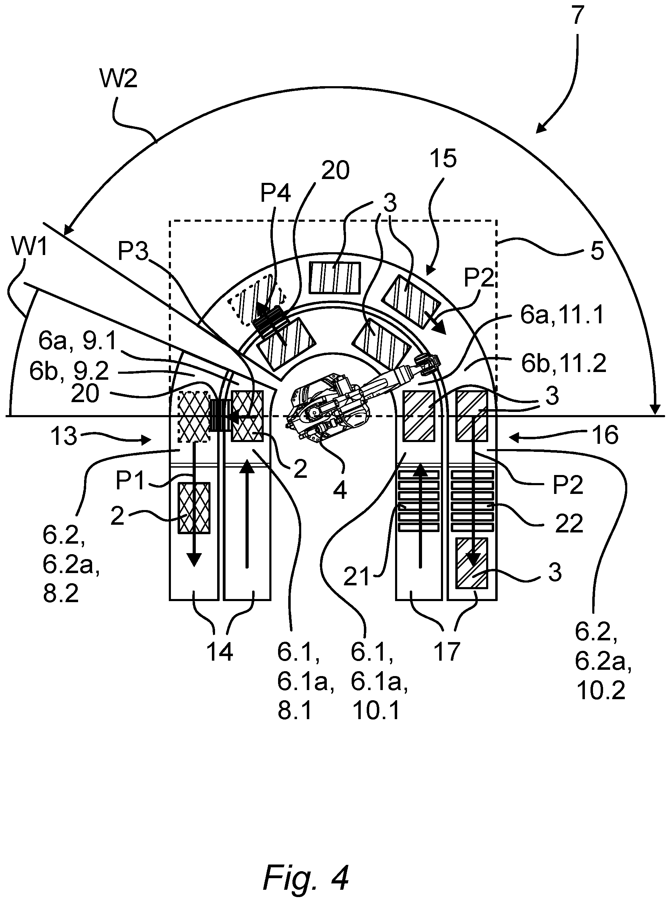

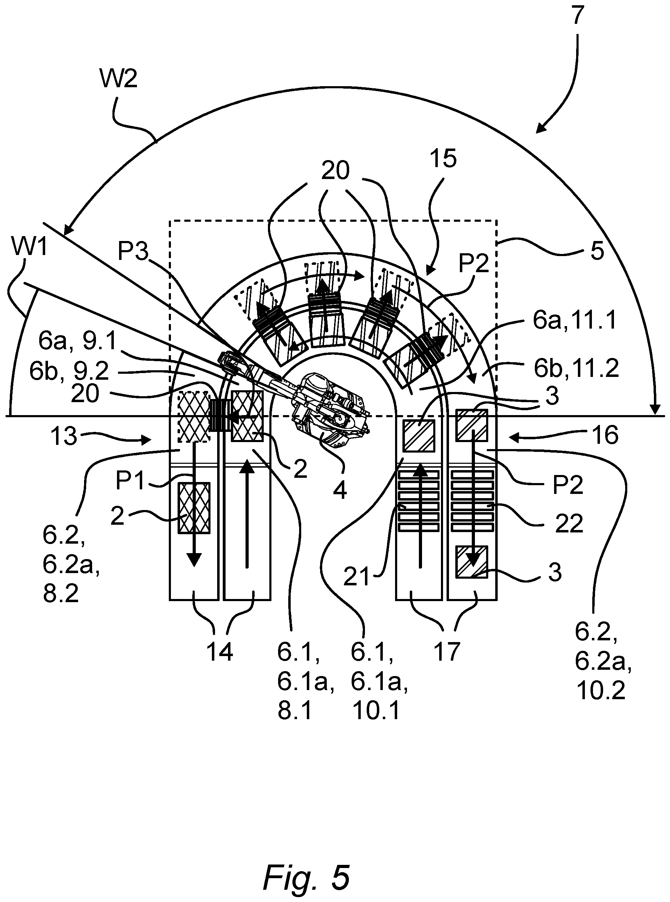

Im Falle der dritten Ausführungsform gemäß Fig. 4 und der vierten Ausführungsform gemäß Fig. 5 erstrecken sich der erste Quell-Behälter-Kurvenbahnabschnitt 9.1 und der zweite Quell-Behälter-Kurvenbahnabschnitt 9.2 über denselben Quell-Behälter-Winkelbereich W1, der erste Ziel-Behälter-Kurvenbahnabschnitt 11.1 und der zweite Ziel-Behälter-Kurvenbahnabschnitt 11.2 erstrecken sich über denselben ZielBehälter-Winkelbereich W2, wobei der Quell-Behälter-Winkelbereich W1 von dem Ziel-Behälter-Winkelbereich W2 verschieden ist, so dass im Arbeitsbereich des Roboterarms 4 eine unterschiedliche Anzahl von Quell-Behältern 2 und Ziel-Behältern 3 positioniert werden können. Im Falle der dritten Ausführungsform gemäß Fig. 4 und der vierten Ausführungsform gemäß Fig. 5 ist der Ziel-Behälter-Winkelbereich W2 deutlich größer als der Quell-Behälter-Winkelbereich W1.

Die verschiedenen Ausführungsformen gemäß Fig. 4 bis Fig. 6 zeigen demgemäß eine Förderanlage 7 mit den beiden ersten Förderbahnen 6.1, die als Zuführbahnen ausgebildet und eingerichtet sind, jeweils zum Heranfördern von Quell-Behältern 2 und Ziel-Behältern 3 an einen Kommissionierbereich 5 und mit den beiden zweiten Förderbahnen 6.2, die als Abführbahnen ausgebildet und eingerichtet sind, jeweils zum Wegfördern von Quell-Behältern 2 und Ziel-Behältern 3 aus dem Kommissionierbereich 5.

Der Kommissionierbereich 5 der Förderanlage 7 wird durch die bogenförmig verlaufenden ersten Kurvenbahnabschnitte 6a der ersten Förderbahnen 6.1 und die bogenförmig verlaufenden zweiten Kurvenbahnabschnitt 6b der zweiten Förderbahnen 6.2 gebildet wird.

Die Förderanlage 7 weist entsprechende antreibbare Querförderer 20 auf, die ausgebildet und eingerichtet sind zum aktiven Transferieren eines jeweiligen Quell-Behälters 2 oder Ziel-Behälters 3 zwischen den jeweiligen ersten Kurvenbahnabschnitten 6a der jeweiligen ersten Förderbahnen 6.1 und den jeweiligen zweiten Kurvenbahnabschnitten 6b der zweiten Förderbahnen 6.2.

Die wenigstens eine erste Förderbahn 6.1 kann beispielsweise von einer ersten Rollenbahn 6.1a gebildet werden, die eine Vielzahl von in Förderrichtung gleichmäßig voneinander beabstandete, drehantreibbare erste Rollen 21 aufweist, und die wenigstens eine zweite Förderbahn 6.2 kann von einer zweiten Rollenbahn 6.2a gebildet werden, die eine Vielzahl von in Förderrichtung gleichmäßig voneinander beabstandete, drehantreibbare zweite Rollen 22 aufweist.

Der antreibbare Querförderer 20 kann von wenigstens einem jeweils zwischen zwei benachbarten Rollen der ersten Förderbahn 6.1 und/oder der zweiten Förderbahn 6.2 angeordneten Riemenoder Kettenhubumsetzer gebildet werden.

In der vierten Ausführungsform gemäß Fig. 5 können beispielsweise an dem ersten Kurvenbahnabschnitt 6a und dem zweiten Kurvenbahnabschnitt 6b für die Ziel-Behälter 3 mehrere antreibbare Querförderer 20 vorgesehen sein.

Der jeweilige erste Kurvenbahnabschnitt 6a der ersten Rollenbahn 6.1a und der jeweilige zweite Kurvenbahnabschnitt 6b der zweiten Rollenbahn 6.2a können wie dargestellt parallel nebeneinander verlaufend angeordnet sein, derart dass der jeweilige erste Kurvenbahnabschnitt 6a und der jeweilige zweite Kurvenbahnabschnitt 6b jeweils auf zwei verschiedenen, konzentrischen Kreisbahnen unterschiedlicher Radien liegen.

Der Roboterarm 4 ist im Falle der vorliegenden Ausführungsbeispiele der Fig. 2 bis Fig. 6 im Zentrum der beiden Kreisbahnen positioniert, auf denen die ersten Kurvenbahnabschnitte 6a der ersten Rollenbahn 6.1a und die zweiten Kurvenbahnabschnitt 6b zweiten Rollenbahn 6.2a liegen.

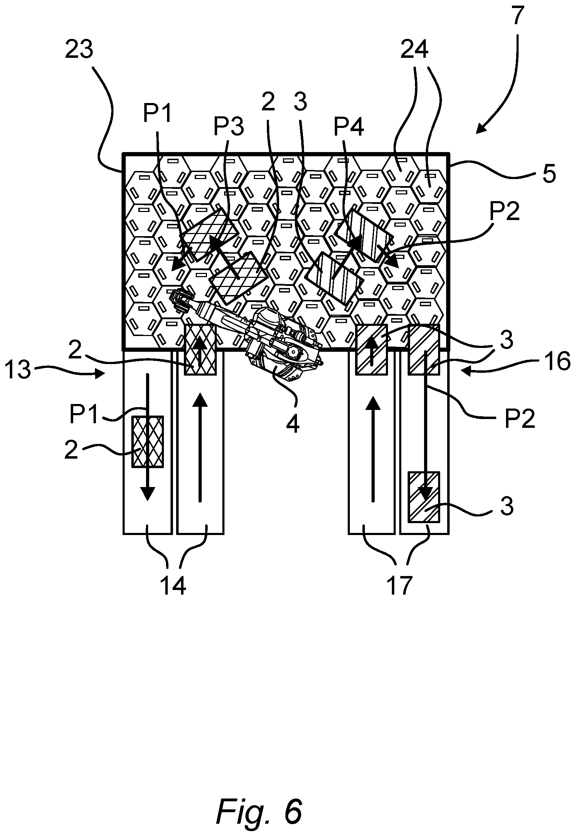

Wie durch die Fig. 6 aufgezeigt ist, können die Schritte des jeweiligen Verfahrens auch mittels eines omnidirektionalen Fördertisches 23 durchgeführt werden, der sich im Kommissionierbereich 5 über den Arbeitsbereich des Roboterarms 4 erstreckt. Die ersten Förderbahnen 6.1 und die ersten Kurvenbahnabschnitte 6a können somit von dem omnidirektionalen Fördertisch 23 gebildet werden, der eine Vielzahl von individuell oder in Gruppen antreibbarer Omnidirektional-Fördereinheiten 24 aufweist, die derart ansteuerbar sind, dass ein herangeförderter Quell-Behälter 2 oder Ziel-Behälter 3 auf dem omnidirektionalen Fördertisch 23 automatisch auf einer jeweilige ersten Trajektorie bewegbar ist, welche die jeweilige erste Förderbahn 6.1 und/oder den jeweiligen bogenförmig verlaufenden ersten Kurvenbahnabschnitt 6a bildet.

In gleicher Weise können die zweiten Förderbahnen 6.2 und die zweiten Kurvenbahnabschnitte 6b von dem omnidirektionalen Fördertisch 23 gebildet werden, dessen Omnidirektional-Fördereinheiten 24 derart ansteuerbar sind, dass ein wegzufördernder Quell-Behälter 2 oder Ziel-Behälter 3 auf dem omnidirektionalen Fördertisch 23 automatisch entlang einer jeweilige zweiten Trajektorie bewegbar ist, welche die jeweilige zweite Förderbahn 6.2 und/oder den jeweiligen bogenförmig verlaufenden zweiten Kurvenbahnabschnitt 6b bildet.

Auch der antreibbare Querförderer 20 kann insoweit von dem omnidirektionalen Fördertisch 23 gebildet werden, dessen Omnidirektional-Fördereinheiten 24 derart ansteuerbar sind, dass ein automatisch zu transferierender Quell-Behälter 2 oder Ziel-Behälter 3 auf dem omnidirektionalen Fördertisch 23 automatisch radial zur ersten Trajektorie und zweiten Trajektorie aus einer Position auf der ersten Trajektorie in eine Position auf der zweiten Trajektorie bewegbar ist.

## Patentansprüche

1. Verfahren zum automatischen Kommissionieren von Stückgut-Objekten (1) aus Quell-Behältern (2) in ZielBehälter (3) mittels eines automatisch angesteuerten Roboterarms (4) in einem Kommissionierbereich (5), aufweisend die Schritte:
- Heranfördern eines Quell-Behälters (2) oder eines Ziel-Behälters (3) an den Kommissionierbereich (5) auf einer ersten Förderbahn (6.1), die als eine Zuführbahn eingerichtet ist, wobei der Quell-Behälter (2) oder der Ziel-Behälter (3) im Kommissionierbereich (5) entlang eines bogenförmig verlaufenden ersten Kurvenbahnabschnitts (6a) der ersten Förderbahn (6.1) in einen Arbeitsbereich des Roboterarms (4) bewegt wird,
- automatisches Transferieren des auf der Zuführbahn in den Kommissionierbereich (5) herangeförderten Quell-Behälters (2) oder Ziel-Behälters (3) aus dem bogenförmig verlaufenden ersten Kurvenbahnabschnitt (6a) der ersten Förderbahn (6.1) in einen neben dem ersten Kurvenbahnabschnitt (6a) der ersten Förderbahn (6.1) liegenden, bogenförmig verlaufenden zweiten Kurvenbahnabschnitt (6b) einer zweiten Förderbahn (6.2), die eine Abführbahn bildet, und
- Wegfördern des Quell-Behälters (2) oder des Ziel-Behälters (3) aus dem Kommissionierbereich (5) auf der zweiten Förderbahn (6.2), wobei der Quell-Behälter (2) oder der Ziel-Behälter (3) im Kommissionierbereich (5) entlang des bogenförmig verlaufenden zweiten Kurvenbahnabschnitts (6b) der zweiten Förderbahn (6.2) aus dem Arbeitsbereich des Roboterarms (4) herausbewegt wird.

2. Verfahren nach Anspruch 1, **dadurch gekennzeichnet, dass** das Transferieren des auf der Zuführbahn in den Kommissionierbereich (5) herangeförderten Quell-Behälters (2) oder Ziel-Behälters (3) aus dem bogenförmig verlaufenden ersten Kurvenbahnabschnitt (6a) der ersten Förderbahn (6.1) in den neben dem ersten Kurvenbahnabschnitt (6a) der ersten Förderbahn (6.1) liegenden, bogenförmig verlaufenden zweiten Kurvenbahnabschnitt (6b) der zweiten Förderbahn (6.2) mittels eines automatisch angesteuerten antreibbaren Querförderers (20) erfolgt.

3. Verfahren nach Anspruch 1, **dadurch gekennzeichnet, dass** das Transferieren des auf der Zuführbahn in den Kommissionierbereich (5) herangeförderten Quell-Behälters (2) oder Ziel-Behälters (3) aus dem bogenförmig verlaufenden ersten Kurvenbahnabschnitt (6a) der ersten Förderbahn (6.1) in den neben dem ersten Kurvenbahnabschnitt (6a) der ersten Förderbahn (6.1) liegenden, bogenförmig verlaufenden zweiten Kurvenbahnabschnitt (6b) der zweiten Förderbahn (6.2) mittels des automatisch angesteuerten Roboters (4) erfolgt oder mittels eines vom automatisch angesteuerten Roboter verschiedenen Hilfsroboterarms erfolgt.

4. Verfahren nach einem der Ansprüche 1 bis 3, **gekennzeichnet durch** die Schritte:
- Heranfördern eines Quell-Behälters (2) an den Kommissionierbereich (5) im Arbeitsbereich des Roboterarms (4) auf einem bogenförmig um den Roboterarm (4) herum verlaufenden ersten Quell-Behälter-Kurvenbahnabschnitt (9.1) einer ersten Quell-Behälter-Förderbahn (8.1), bei welcher der erste Quell-Behälter-Kurvenbahnabschnitt (9.1) eine Quell-Behälter-Zuführbahn bildet,
- Heranfördern eines Ziel-Behälters (3) an den Kommissionierbereich (5) im Arbeitsbereich des Roboterarms (4) auf einem bogenförmig um den Roboterarm (4) herum verlaufenden ersten Ziel-Behälter-Kurvenbahnabschnitt (11.1) einer ersten ZielBehälter-Förderbahn (10.1), bei welcher der erste Ziel-Behälter-Kurvenbahnabschnitt (11.1) eine ZielBehälter-Zuführbahn bildet,
- Automatisches Umsetzen wenigstens eines Stückgut-Objektes (1) aus dem Quell-Behälter (2) in den Ziel-Behälter (3) mittels des Roboterarms (4), vor oder nach einem automatischen Transferierens des Quell-Behälters (2) und/oder des Ziel-Behälters (3),
- automatisches Transferieren des auf der Quell-Behälter-Zuführbahn in den Kommissionierbereich (5) herangeförderten Quell-Behälters (2) aus dem bogenförmig verlaufenden ersten Quell-Behälter-Kurvenbahnabschnitt (9.1) der ersten Quell-Behälter-Förderbahn (8.1) in einen neben dem ersten Quell-Behälter-Kurvenbahnabschnitt (9.1) der ersten Quell-Behälter-Förderbahn (8.1) liegenden, bogenförmig verlaufenden zweiten Quell-Behälter-Kurvenbahnabschnitt (9.2) einer zweiten Quell-Behälter-Förderbahn (8.2), die eine Quell-Behälter-Abführbahn bildet,
- automatisches Transferieren des auf der ZielBehälter-Zuführbahn in den Kommissionierbereich (5) herangeförderten Ziel-Behälters (3) aus dem bogenförmig verlaufenden ersten Ziel-Behälter-Kurvenbahnabschnitt (11.1) der ersten ZielBehälter-Förderbahn (10.1) in einen neben dem ersten Ziel-Behälter-Kurvenbahnabschnitt (11.1) der ersten Ziel-Behälter-Förderbahn (10.1) liegenden, bogenförmig verlaufenden zweiten Ziel-Behälter-Kurvenbahnabschnitt (11.2) einer zweiten ZielBehälter-Förderbahn (10.2), die eine Ziel-Behälter-Abführbahn bildet,
- Wegfördern des Quell-Behälters (2) aus dem Kommissionierbereich (5) auf der zweiten Quell-Behälter-Förderbahn (8.2), wobei der Quell-Behälter (2) im Kommissionierbereich (5) entlang des bogenförmig verlaufenden zweiten Quell-Behälter-Kurvenbahnabschnitts (9.2) der zweiten Quell-Behälter-Förderbahn (8.2) aus dem Arbeitsbereich des Roboterarms (4) herausbewegt wird,
- Wegfördern des Ziel-Behälters (3) aus dem Kommissionierbereich (5) auf der zweiten Ziel-Behälter-Förderbahn (10.2), wobei der Ziel-Behälter (3) im Kommissionierbereich (5) entlang des bogenförmig verlaufenden zweiten Ziel-Behälter-Kurvenbahnabschnitts (11.2) der zweiten ZielBehälter-Förderbahn (10.2) aus dem Arbeitsbereich des Roboterarms (4) herausbewegt wird.

5. Verfahren nach Anspruch 4, **dadurch gekennzeichnet, dass** das automatische Transferieren des Quell-Behälters (2) an einem distalen Endabschnitt (12) des ersten Quell-Behälter-Kurvenbahnabschnitts (9.1) und des zweiten Quell-Behälter-Kurvenbahnabschnitts (9.2) durchgeführt wird, welcher distale Endabschnitt (12) entfernt von einem gegenüberliegenden Anschlussabschnitt (13) des ersten Quell-Behälter-Kurvenbahnabschnitts (9.1) und des zweiten Quell-Behälter-Kurvenbahnabschnitts (9.2) angeordnet ist, an welchen Anschlussförderbahnen (14) an die erste Quell-Behälter-Förderbahn (8.1) und zweite Quell-Behälter-Förderbahn (8.2) angeschlossen sind, und/oder das automatische Transferieren des Ziel-Behälters (3) an einem distalen Endabschnitt (15) des ersten ZielBehälter-Kurvenbahnabschnitts (11.1) und des zweiten Ziel-Behälter-Kurvenbahnabschnitts (11.2) durchgeführt wird, welcher distale Endabschnitt (15) entfernt von einem gegenüberliegenden Anschlussabschnitt (16) des ersten Ziel-Behälter-Kurvenbahnabschnitts (11.1) und des zweiten Ziel-Behälter-Kurvenbahnabschnitts (11.2) angeordnet ist, an welchen Anschlussförderbahnen (17) an die erste Ziel-Behälter-Förderbahn (10.1) und zweite ZielBehälter-Förderbahn (10.2) angeschlossen sind.

6. Verfahren nach Anspruch 4, **dadurch gekennzeichnet, dass** das automatische Transferieren des Quell-Behälters (2) an einem proximalen Anschlussabschnitt (18) des ersten Quell-Behälter-Kurvenbahnabschnitts (9.1) und des zweiten Quell-Behälter-Kurvenbahnabschnitts (9.2) durchgeführt wird, welcher proximalen Anschlussabschnitt (18) entfernt von einem gegenüberliegenden Endabschnitt (12) des ersten Quell-Behälter-Kurvenbahnabschnitts (9.1) und des zweiten Quell-Behälter-Kurvenbahnabschnitts (9.2) angeordnet ist, wobei an dem proximalen Anschlussabschnitt (18) Anschlussförderbahnen (17) an die erste Quell-Behälter-Förderbahn (6.1) und zweite Quell-Behälter-Förderbahn (6.2) angeschlossen sind, und/oder das automatische Transferieren des Ziel-Behälters (3) an einem proximalen Anschlussabschnitt (19) des ersten Ziel-Behälter-Kurvenbahnabschnitts (11.1) und des zweiten Ziel-Behälter-Kurvenbahnabschnitts (11.2) durchgeführt wird, welcher proximalen Anschlussabschnitt (19) entfernt von einem gegenüberliegenden Endabschnitt (15) des ersten Ziel-Behälter-Kurvenbahnabschnitts (11.1) und des zweiten Ziel-Behälter-Kurvenbahnabschnitts (11.2) angeordnet ist, wobei an dem proximalen Anschlussabschnitt (19) Anschlussförderbahnen (17) an die erste Ziel-Behälter-Förderbahn (10.1) und zweite ZielBehälter-Förderbahn (10.2) angeschlossen sind.

7. Verfahren nach einem der Ansprüche 4 bis 6, **dadurch gekennzeichnet, dass** der erste Quell-Behälter-Kurvenbahnabschnitt (9.1) und der zweite Quell-Behälter-Kurvenbahnabschnitt (9.2) sich über denselben Quell-Behälter-Winkelbereich (W1) erstrecken, der erste ZielBehälter-Kurvenbahnabschnitt (11.1) und der zweite ZielBehälter-Kurvenbahnabschnitt (11.2) sich über denselben Ziel-Behälter-Winkelbereich (W2) erstrecken, und der Quell-Behälter-Winkelbereich (W1) von dem Ziel-Behälter-Winkelbereich (W2) verschieden ist, so dass im Arbeitsbereich des Roboterarms (4) eine unterschiedliche Anzahl von Quell-Behältern (2) und Ziel-Behältern (3) positioniert werden können.

8. Verfahren nach einem der Ansprüche 1 bis 7, **dadurch gekennzeichnet, dass** die Schritte des Verfahrens nach einem der Ansprüche 1 bis 3 mittels eines omnidirektionalen Fördertisches (23) durchgeführt wird, der sich im Kommissionierbereich (5) über den Arbeitsbereich des Roboterarms (4) erstreckt.

9. Verfahren nach Anspruch 8, **gekennzeichnet durch** die Schritte:
- Heranfördern des Quell-Behälters (2) oder des Ziel-Behälters (3) an den Kommissionierbereich (5) auf der ersten Förderbahn (6.1), wobei der Quell-Behälter (2) oder der Ziel-Behälter (3) im Kommissionierbereich (5) dadurch entlang des bogenförmig verlaufenden ersten Kurvenbahnabschnitts (6a) der ersten Förderbahn (6.1) in den Arbeitsbereich des Roboterarms (4) bewegt wird, indem zumindest der erste Kurvenbahnabschnitt (6a) von dem omnidirektionalen Fördertisch (23) gebildet wird, der eine Vielzahl von individuell oder in Gruppen antreibbarer Omnidirektional-Fördereinheiten (24) aufweist, die derart angesteuert werden, dass ein herangeförderter Quell-Behälter (2) oder Ziel-Behälter (3) auf dem omnidirektionalen Fördertisch (23) automatisch auf einer ersten Trajektorie bewegt wird, die den bogenförmig verlaufenden ersten Kurvenbahnabschnitt (6a) bildet,
- automatisches Transferieren des auf der Zuführbahn in den Kommissionierbereich (5) herangeförderten Quell-Behälters (2) oder Ziel-Behälters (3) einer Position auf der ersten Trajektorie in eine Position auf einer zweiten Trajektorie, die neben der ersten Trajektorie verläuft, indem die Omnidirektional-Fördereinheiten (24) derart angesteuert werden, dass ein zu transferierender Quell-Behälter (2) oder Ziel-Behälter (3) auf dem omnidirektionalen Fördertisch (23) automatisch radial von der ersten Trajektorie auf die zweite Trajektorie bewegt wird, die den bogenförmig verlaufenden zweiten Kurvenbahnabschnitt (6b) bildet, und
- Wegfördern des Quell-Behälters (2) oder des Ziel-Behälters (3) aus dem Kommissionierbereich (5) auf einer zweiten Förderbahn (6.2), die entlang der zweiten Trajektorie führt, wobei der Quell-Behälter (2) oder der Ziel-Behälter (3) im Kommissionierbereich (5) dadurch entlang des bogenförmig verlaufenden zweiten Kurvenbahnabschnitts (6b) der zweiten Förderbahn (6.2) aus dem Arbeitsbereich des Roboterarms (4) herausbewegt wird, indem zumindest der zweite Kurvenbahnabschnitt (6b) von dem omnidirektionalen Fördertisch (23) gebildet wird, dessen Omnidirektional-Fördereinheiten (24) derart angesteuert werden, dass ein wegzufördernder Quell-Behälter (2) oder Ziel-Behälter (3) auf dem omnidirektionalen Fördertisch (23) automatisch entlang der zweiten Trajektorie bewegt wird.

10. Förderanlage zum Fördern von Transport-Behältern auf Förderbahnen (6.1, 6.2), insbesondere zur Durchführung eines Verfahrens nach einem der Ansprüche 1 bis 9, aufweisend:
- wenigstens eine erste Förderbahn (6.1), die als eine Zuführbahn ausgebildet und eingerichtet ist, zum Heranfördern von Transport-Behältern an einen Kommissionierbereich (5) der Förderanlage (7),
- wenigstens eine zweite Förderbahn (6.2), die als eine Abführbahn ausgebildet und eingerichtet ist, zum Wegfördern von Transport-Behältern aus dem Kommissionierbereich (5) der Förderanlage (7),
- wobei der Kommissionierbereich (5) der Förderanlage (7) durch einen bogenförmig verlaufenden ersten Kurvenbahnabschnitt (6a) der ersten Förderbahn (6.1) und einen neben dem ersten Kurvenbahnabschnitt (6a) der ersten Förderbahn (6.1) bogenförmig verlaufenden zweiten Kurvenbahnabschnitt (6.2) der zweiten Förderbahn (6.2) gebildet wird, und aufweisend
- einen antreibbaren Querförderer (20) der ausgebildet und eingerichtet ist zum aktiven Transferieren eines jeweiligen Transport-Behälters zwischen dem ersten Kurvenbahnabschnitt (6a) der ersten Förderbahn (6.1) und dem zweiten Kurvenbahnabschnitt (6b) der zweiten Förderbahn (6.2).

11. Förderanlage nach Anspruch 10, **dadurch gekennzeichnet, dass** die wenigstens eine erste Förderbahn (6.1) von einer ersten Rollenbahn (6.1a) gebildet wird, die eine Vielzahl von in Förderrichtung gleichmäßig voneinander beabstandete, drehantreibbare erste Rollen (21) aufweist, die wenigstens eine zweite Förderbahn (6.2) von einer zweiten Rollenbahn (6.2a) gebildet wird, die eine Vielzahl von in Förderrichtung gleichmäßig voneinander beabstandete, drehantreibbare zweite Rollen (22) aufweist, und/oder der antreibbare Querförderer (20) von wenigstens einem jeweils zwischen zwei benachbarten Rollen (21, 22) der ersten Förderbahn (6.1) und/oder der zweiten Förderbahn (6.2) angeordneten Riemen- oder Kettenhubumsetzer gebildet wird.

12. Förderanlage nach Anspruch 11, **dadurch gekennzeichnet, dass** der erste Kurvenbahnabschnitt (6a) der ersten Rollenbahn (6.1a) und der zweite Kurvenbahnabschnitt (6b) der zweiten Rollenbahn (6.2a) parallel nebeneinander verlaufend angeordnet sind, derart dass der erste Kurvenbahnabschnitt (6a) und der zweite Kurvenbahnabschnitt (6b) auf zwei verschiedenen, konzentrischen Kreisbahnen unterschiedlicher Radien liegen.

13. Förderanlage nach Anspruch 12, **dadurch gekennzeichnet, dass** der Roboterarm (4) im Zentrum der beiden Kreisbahnen positioniert ist, auf denen der erste Kurvenbahnabschnitt (6a) der ersten Rollenbahn (6.1a) und der zweite Kurvenbahnabschnitt (6b) zweiten Rollenbahn (6.2a) liegen.

14. Förderanlage nach Anspruch 10, **dadurch gekennzeichnet, dass** die wenigstens eine erste Förderbahn (6.1) und/oder der erste Kurvenbahnabschnitt (6a) von einem omnidirektionalen Fördertisch (23) gebildet wird, der eine Vielzahl von individuell oder in Gruppen antreibbarer Omnidirektional-Fördereinheiten (24) aufweist, die derart ansteuerbar sind, dass ein herangeförderter Quell-Behälter (2) oder Ziel-Behälter (3) auf dem omnidirektionalen Fördertisch (23) automatisch auf einer ersten Trajektorie bewegbar ist, welche die erste Förderbahn (6.1) und/oder den bogenförmig verlaufenden ersten Kurvenbahnabschnitt (6a) bildet, und die wenigstens eine zweite Förderbahn (6.2) und/oder der zweite Kurvenbahnabschnitt (6b) von dem omnidirektionalen Fördertisch (23) gebildet wird, dessen Omnidirektional-Fördereinheiten (24) derart ansteuerbar sind, dass ein wegzufördernder Quell-Behälter (2) oder Ziel-Behälter (3) auf dem omnidirektionalen Fördertisch (23) automatisch entlang einer zweiten Trajektorie bewegbar ist, welche die zweite Förderbahn (6.2) und/oder den bogenförmig verlaufenden zweiten Kurvenbahnabschnitt (6b) bildet, und/oder der antreibbare Querförderer (20) von dem omnidirektionalen Fördertisch (23) gebildet wird, dessen Omnidirektional-Fördereinheiten (24) derart ansteuerbar sind, dass ein automatisch zu transferierender Quell-Behälter (2) oder Ziel-Behälter (3) auf dem omnidirektionalen Fördertisch (23) automatisch radial zur ersten Trajektorie und zweiten Trajektorie aus einer Position auf der ersten Trajektorie in eine Position auf der zweiten Trajektorie bewegbar ist.

15. Computerprogrammprodukt, aufweisend einen maschinenlesbaren Träger, auf dem Programmcode gespeichert ist, der von einer Kommissioniersteuerung einer Förderanlage (7), insbesondere einer Förderanlage (7) nach einem der Ansprüche 10 bis 14, auslesbar ist und der die Kommissioniersteuerung ausbildet und/oder einrichtet, ein Verfahren nach einem der Ansprüche 1 bis 9 durchzuführen, wenn der Programmcode von der Kommissioniersteuerung ausgeführt wird.
